(19) Europäisches Patentamt
European Patent Office
Office européen des brevets

(11) **EP 1 750 457 A1**

(12) **EUROPEAN PATENT APPLICATION**

(43) Date of publication:
**07.02.2007 Bulletin 2007/06**

(51) Int Cl.:
**H04N 11/02** (2006.01)

(21) Application number: **05300642.5**

(22) Date of filing: **02.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing**
**92100 Boulogne-Billancourt (FR)**

(72) Inventors:
• **Uijtdehaag, Joost**
  **4703 AZ Rosendaal (NL)**

• **van Rooy, Johannes H.J.M**
  **5235 EM S'Hertogenbosch (NL)**
• **Centen, Petrus Gijsbertus Maria**
  **5051 BW Goirle (NL)**

(74) Representative: **Arnold, Klaus-Peter**
**Deutsche Thomson-Brandt GmbH**
**European Patent Operations**
**Karl-Wiechert-Allee 74**
**30625 Hannover (DE)**

(54) **Method and circuit arrangement for processing a video signal, and respective camera**

(57) The method for processing a video signal having three colour components (R, G, B) for a picture display with n horizontal lines comprises the steps of selecting a first colour component (G) having a vertical offset with regard to the two other colour components (R, B) and reconstructing missing colour components (R, G, B) of a horizontal line by a vertical interpolation of neighbouring colour components (R, G, B). The first colour component (G) may have in particular a vertical offset of one vertical line with regard to the two other colour components and in a preferred embodiment the first colour component (G) is the green colour component and the selection of the colour components (R, G, B) is alternating with regard to subsequent frames or fields. The method may be used in particular within a circuit arrangement comprising a camera and a base station for providing slow motion television signals with a high picture quality.

$$A_{G3} = (G_2+G_4) / (R_1+R_3+R_5)$$

$$R_3 * A_{G3} = G_3$$

**Fig. 1**

**Description**

**FIELD OF THE INVENTION**

The present invention relates to a method and a circuit arrangement for processing a video signal having three colour components for providing a picture display of n horizontal lines, the method and the arrangement using a compression for a reduced transmission bandwidth. The method and the arrangement are in particular applicable for a camera for providing a high quality slow motion transmission and recording.

**BACKGROUND**

From television broadcast cameras it is known to capture video at three times the speed, as compared to standard television, for providing a slow motion reproduction with high quality. For example, for a high quality slow motion display in accordance with the PAL standard, each field is recorded with a 150 Hz rate, and for the slow motion a playback with 25 Hz interlace is used.

When the frame rate increases or the number of horizontal lines, the needed bandwidth for the transmission, also for the processing circuitry, will increase proportionally. For standard definition television a CCD readout with triple speed is possible within the present television system because of a large bandwidth and processing overhead. But for a HDTV system, a six times lager bandwidth is required compared to standard definition systems, which would cross practical boundaries of existing camera systems. Specifically, the analog transmission system, which is used to transport the video information from a camera to the base station has to be improved, when no bandwidth limitations are accepted.

For a reduction of the bandwidth and/or the respective data rate, compression methods are known, which reduce the colour resolution without reducing the resolution of the luminance, for example so called 4:2:2 and 4:2:0 sampling methods. For the 4:2:2 sampling, the luminance signal is sampled with a 13,5 MHz sampling rate, and the two colour difference signals each with 6,75 MHz. The 4:2:2 sampling method is described by the CCIR-601 standard, also known as ITU-R 601. The 4:2:0 sampling method uses also a sampling rate of the luminance signal of 13,5 MHz, but the two colour difference signals are sampled each with 6,75 MHz only every second horizontal line. For a picture display, the 4:2:0 sampling method uses the information of the sampled colour difference signals for two horizontal lines each. This method is used in particular for the PAL digital video (DV) standard. Both systems are based on the properties of human visibility, which is less sensitive to colour resolution as compared to luminance resolution.

A broadcast camera providing a high quality slow motion is for example the LDK23 high-speed camera, manufactured by the Thomson Grass Valley company. This camera has a triple speed CCD readout with 150 or 180 fields per second, and provides both a 150 Hz and a normal 50 Hz output. The camera is in particular advantageous for sport events. For a slow motion display, 50 fields are recalculated out of 150 by using a motion smoothing for improved picture quality.

Methods for the reconstruction of missing colour pixels are known from cameras using a single CCD optical sensor. A widely used method is to use a pixel grid according to a Bayer colour filter array. Missing colour pixels are then calculated from neighbouring colour pixels by using interpolation algorithms, as known for example from US 6,181,376 and US 6,714,242.

**SUMMARY OF THE INVENTION**

The method according to the present invention processes a video signal having three colour components for a picture display of n horizontal lines arranged within consecutive fields or frames. For each frame or field, alternatively the pixel values of a first colour component or a second and third colour component are selected. The data rate respectively the bandwidth for a data transmission is therefore reduced for example by a factor of two. In a later stage, the missing colour component of a respective horizontal line is calculated by a vertical interpolation of neighbouring colour components.

The first colour component is in particular the green colour component and the selection of the colour components with regard to the horizontal line is advantageously such, that the green colour component has a vertical offset of a half vertical line or of one vertical line with regard to the two other colour components. The video signal with the three colour components may be provided for example by a professional camera comprising three optical sensors for the colours red, green, and blue. When using a respective selection of the colour components, the data rate of the output signal of the video camera is considerably reduced. This allows in particular a high speed video camera within existing television broadcast infrastructure, the camera having for example a read out of the optical sensors with 150 or 180 fields per second. The complete video signal is reconstructed later then by the interpolation of the available colour components.

In a further aspect of the invention, the selection of the first colour component and the second and third colour component is alternating for subsequent frames or fields. For example for odd frames the even horizontal lines for the first colour component and the odd horizontal lines of the second and third colour component are selected, and for the even frames the odd lines of the first colour component and the even lines of the second and third colour component are selected. This provides an opposite interlace for the colour components and when reconstructing the video signal for a progressive picture display, most of the original vertical resolution will be restored in this way without any horizontal artefacts, because all processing is vertically oriented. This method has therefore a superior vertical aliasing performance as compared to other methods, which use for example half of the number of lines in progressive mode or use standard interlacing.

When using the alternative selection of colour components of subsequent fields or frames, the adjacent frames are used to diminish aliasing in the colours. Also, aliasing resulting from the sub-sampling will be reversed each frame and will be less visible therefore. Because the processing is vertically oriented, in particular no horizontal artifacts occur.

In another aspect of the invention missing colour components are calculated by using neighbouring lines of the missing colour component being related to neighbouring lines of a further colour component for providing colour ratios for the respective missing line. The pixel values of the other colour component can then be weighted such that the values of the other colour component of the missing horizontal line is weighted with a higher weighting factor, as compared with the neighbouring horizontal lines.

**DESCRIPTION OF THE DRAWINGS**

Preferred embodiments of the invention are explained in more detail now with regard to schematic drawings, which show:

Fig. 1    a sample grid for demonstrating the calculation of missing colour pixels,
Fig. 2    calculation steps performed by a signal processor for obtaining a missing pixel value, and
Fig. 3    a circuit arrangement comprising a camera and a base station for providing a slow motion video signal.

**DESCRIPTION OF PREFERRED EMBODIMENTS**

The method for processing a video signal is described now for an application with a video camera, in particular with a high-definition video camera having a high-speed image acquisition. The camera comprises three optical sensors for providing a video signal with three colour components red, green and blue.

For the color image acquisition a sample grid is chosen having the red and blue lines R, B with an offset with respect to the green lines G, for example a half-line offset or a one line offset. These lines are then merged to recreate a progressive image. The mathematical algorithm for a one line offset and a color grid with red, blue and green lines R, B, G alternating from field to field is as follows:

For the odd frames only the odd lines for R and B and the even lines for G, as provided from the video camera, are used:

$$G_{2*j,\ i,\ 2*N+1} = \text{Green}$$

$$R_{2*j+1,\ i,\ 2*N+1} = \text{Red}$$

$$B_{2*j+1,\ i,\ 2*N+1} = \text{Blue}$$

j = line number. i = pixel number, N = frame number, i = 1, 2, 3, ..., j, N = 0, 1, 2, 3, .... For the even frames the situation is reversed:

$$G_{2*j+1,\ i,\ 2*N} = \text{Green}$$

$$R_{2*j,\ i,\ 2*N} = \text{Red}$$

$$B_{2*j\,,\,i\,,\,2*N} \quad = \text{Blue}$$

For obtaining the green pixel values of missing lines j, the green/red color ratio AG is calculated for the respective lines j from the neighboring lines in accordance with the following rule:

Odd frames:

$$AG_{2*j+1,i,2*N+1} = \frac{0.5*G_{2*j,i,2*N+1}+0.5*G_{2*j+2,i,2*N+1}}{0.25*R_{2*j-1,i,2*N+1}+0.5*R_{2*j+1,i,2*N+1}+0.25*R_{2*j+3,i,2*N+1}}$$

Even frames:

$$AG_{2*j,i,2*N} = \frac{0.5*G_{2*j-1,i,2*N}+0.5*G_{2*j+1,i,2*N}}{0.25*R_{2*j-2,i,2*N}+0.5*R_{2*j,i,2*N}+0.25*R_{2*j+2,i,2*N}}$$

For obtaining the red pixel values of missing lines j, the red/green color ratio AR is calculated for the respective lines j from the neighboring lines in accordance with the following rule:

Odd frames:

$$AR_{2*j,i,2*N+1} = \frac{0.5*R_{2*j-1,i,2*N+1}+0.5*R_{2*j+1,i,2*N+1}}{0.25*G_{2*j-2,i,2*N+1}+0.5*G_{2*j,i,2*N+1}+0.25*G_{2*j+2,i,2*N+1}}$$

Even frames:

$$AR_{2*j+1,i,2*N} = \frac{0.5*R_{2*j,i,2*N}+0.5*R_{2*j+2,i,2*N}}{0.25*G_{2*j-1,i,2*N}+0.5*G_{2*j+1,i,2*N}+0.25*G_{2*j+3,i,2*N}}$$

For obtaining the blue pixel values of missing lines j, the blue/green color ratio AB is calculated for the respective lines j from the neighboring lines in accordance with the following rule:

Odd frames:

$$AB_{2*j,i,2*N+1} = \frac{0.5*B_{2*j-1,i,2*N+1}+0.5*B_{2*j+1,i,2*N+1}}{0.25*G_{2*j-2,i,2*N+1}+0.5*G_{2*j,i,2*N+1}+0.25*G_{2*j+2,i,2*N+1}}$$

Even frames:

$$AB_{2*j+1,i,2*N} = \frac{0.5*B_{2*j,i,2*N}+0.5*B_{2*j+2,i,2*N}}{0.25*G_{2*j-1,i,2*N}+0.5*G_{2*j+1,i,2*N}+0.25*G_{2*j+3,i,2*N}}$$

The missing samples for the colors are then calculated from the color ratios AG, AR, AB in accordance with the following rules:

For green:

Odd frames:

$$G_{2*j+1,i,2*N+1} = R_{2*j+1,i,2*N+1} * AG_{2*j+1,i,2*N+1}$$

Even frames:

$$G_{2*j,i,2*N} = R_{2*j,i,2*N} * AG_{2*j,i,2*N}$$

For red:

Odd frames:

$$R_{2*j,i,2*N+1} = G_{2*j,i,2*N+1} * AR_{2*j,i,2*N+1}$$

Even frames:

$$R_{2*j+1,i,2*N} = G_{2*j+1,i,2*N} * AR_{2*j+1,i,2*N}$$

For blue:

Odd frames:

$$B_{2*j,i,2*N+1} = G_{2*j,i,2*N+1} * AB_{2*j,i,2*N+1}$$

Even frames:

$$B_{2*j,+1i,2*N} = G_{2*j+1,i,2*N} * AB_{2*j+1,i,2*N}$$

Most of the original vertical resolution will be restored in this way. Because all processing is vertically oriented, in particular no horizontal artifacts occur. Having the location of the red, blue and green lines alternating from field to field is in particular preferred, because this method provides an opposite interlace for the color lines resulting in an improved picture quality.

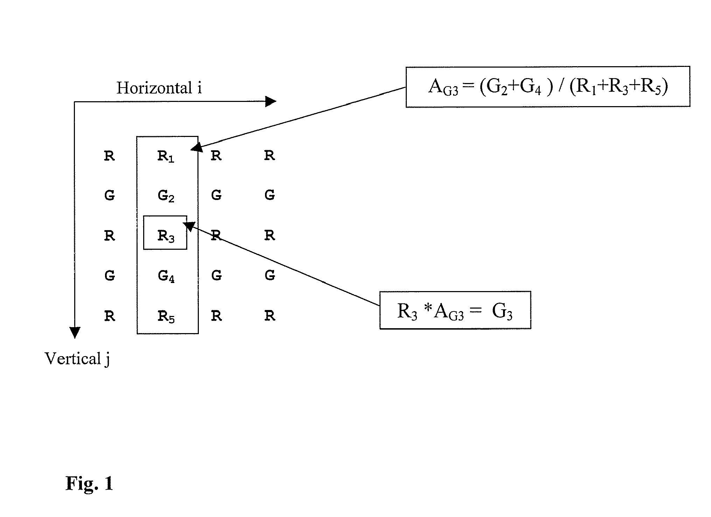

This method is illustrated by means of an example shown in figure 1. Shown are samples for the colours red R and green G of a frame N with a sample grid comprising lines 1 - 5. Only index j is mentioned for one column in the figure, the indices N for frame number and i for pixel number are omitted for more clarity. The samples for red R are used only for the odd lines, also the samples for blue, not shown in figure 1. The samples for green G are sampled only for the even lines.

The missing sample $G_3$ for line 3 is then calculated as shown in the figure 1. The colour ratio $AG_3$ is calculated in accordance with the rules explained above:

$$A_{G3} \sim (G_2 + G_4) / (R_1 + R_3 + R_5).$$

Then the sample $G_3$ is calculated by a multiplication of the colour ratio $AG_3$ with the sample $R_3$.

When using logarithmic sample values for the colours R, G, B, the mathematical description is correspondingly, as shown below. The calculation of the missing samples is then very easy to implement in hardware, because only additions and subtractions have to be performed by a respective signal processor. In the formulas below, scale factors 0,5 and 0,25 are included for obtaining the correct absolute values.

The sample grid is the same for even and odd frames: For a one line offset and a sample grid with the colours red, blue and green R, B, G, and the lines R, B, G alternating from field to field, the mathematical description is as follows:

for the odd frames only the odd lines for R and B and the even lines for G are used:

$$G_{2*j,\ i,\ 2*N+1} = \text{Green}$$

$$R_{2*j+1,\ i,\ 2*N+1} = \text{Red}$$

$$B_{2*j+1,\ i,\ 2*N+1} = \text{Blue}$$

j = line number. i = pixel number, N = frame number, i = 1, 2, 3, ..., j, N = 0, 1, 2, 3, .... For the even frames the situation is reversed:

$$G_{2*j+1,\ i,\ 2*N} = \text{Green}$$

$$R_{2*j,\ i,\ 2*N} = \text{Red}$$

$$B_{2*j,\ i,\ 2*N} = \text{Blue}$$

For obtaining the green pixel values of missing lines j, the green/red color ratio AG is calculated for the respective lines j from the neighboring lines in accordance with the following rule:

Odd frames:

$$AG_{2*j+1,i,N+1} = 0.5 * G_{2*j,i,N+1} + 0.5 * G_{2*j+2,i,N+1} - (0.25 * R_{2*j-1,i,N+1} + 0.5 * R_{2*j+1,i,N+1} +$$

$$\text{(1)}$$

$$0.25 * R_{2*j+3,i,N+1})$$

Even frames:

$$AG_{2*j,i,N} = 0.5*G_{2*j-1,i,N} + 0.5*G_{2*j+1,i,N} - (0.25*R_{2*j-2,i,N} + 0.5*R_{2*j,i,N} +$$

$$0.25*R_{2*j+2,i,N})$$

For obtaining the red pixel values of missing lines j, the red/green color ratio AR is calculated for the respective lines j from the neighboring lines in accordance with the following rule:

Odd frames:

$$AR_{2*j,i,N+1} = 0.5*R_{2*j+1,i,N+1} + 0.5*R_{2*j-1,i,N+1} - (0.25*G_{2*j-2,i,N+1} + 0.5*G_{2*j,i,N+1} +$$

$$0.25*G_{2*j+2,i,N+1})$$

Even frames:

$$AR_{2*j+1,i,N} = 0.5*R_{2*j,i,N} + 0.5*R_{2*j+2,i,N} - (0.25*G_{2*j-1,i,N} + 0.5*G_{2*j+1,i,N} +$$

$$0.25*G_{2*j+3,i,N})$$

For obtaining the blue pixel values of missing lines j, the blue/green color ratio AB is calculated for the respective lines j from the neighboring lines in accordance with the following rule:

Odd frames:

$$AB_{2*j,i,N+1} = 0.5*B_{2*j+1,i,N+1} + 0.5*B_{2*j-1,i,N+1} - (0.25*G_{2*j-2,i,N+1} + 0.5*G_{2*j,i,N+1} +$$

$$0.25*G_{2*j+2,i,N+1})$$

Even frames:

$$AB_{2*j+1,i,N} = 0.5*B_{2*j,i,N} + 0.5*B_{2*j+2,i,N} - (0.25*G_{2*j-1,i,N} + 0.5*G_{2*j+1,i,N} +$$

$$0.25*G_{2*j+3,i,N})$$

The missing samples for the colors are then calculated from the color ratios AG, AR, AB in accordance with the following rules:

For green:

Odd frames:

$$G_{2*j+1,i,2*N+1} = R_{2*j+1,i,2*N+1} + AG_{2*j+1,i,2*N+1}$$

Even frames:

$$G_{2*j,i,2*N} = R_{2*j,i,2*N} + AG_{2*j,i,2*N}$$

For red:

Odd frames:

$$R_{2*j,i,2*N+1} = G_{2*j,i,2*N+1} + AR_{2*j,i,2*N+1}$$

Even frames:

$$R_{2*j+1,i,2*N} = G_{2*j+1,i,2*N} + AR_{2*j+1,i,2*N}$$

For blue:

Odd frames:

$$B_{2*j,i,2*N+1} = G_{2*j,i,2*N+1} + AB_{2*j,i,2*N+1}$$

Even frames:

$$B_{2*j,+1i,2*N} = G_{2*j+1,i,2*N} + AB_{2*j+1,i,2*N}$$

The described method may be used for example for a high-definition television or video camera having a high-speed image acquisition. For a progressive display with 720 lines, known as 720P, then actually 720i or 360P is needed and this reduces the vertical bandwidth and therefore the data rate. 720P at 120 frames/sec fits into the existing clockrates and sampling:

| | 120 Hz | 180Hz |
| --- | --- | --- |
| Framerate: | 120 Hz | 180Hz |
| clock: | 74.25 MHz | 74.25 MHz |
| number of total lines/frame: | 750 | 750 |
| number of active lines/frame: | 720 | 720 |
| number of total pixels: | 1650 | 1100 |
| number of active pixels: | 1280 | 960 |

For progressive video standards, e.g. HDTV 720p, it is therefore possible to double the frame acquisition rate without having to double the processing and transmission bandwidths. The method as described has in particular a superior vertical aliasing performance compared to other straight forward methods that use half the number of lines in progressive mode, or use standard interlacing.

For interlace video standards, e.g. HDTV 1920x1080, 1080i, the method can provide a semi-progressive format which can be used to boost up performance of temporal processing steps like scaling for eliminating interlace artifacts. The method could also be used to generate a 1080 progressive format, while using a 1080 interlace system architecture.

For still-picture images, the method allows a complete image reconstruction for the still-pictures by using a temporal interpolation technique, when using for example two frames, each with an offset of the green lines G of one line with respect to the lines red and blue, R, B, the location of the red, blue and green lines alternating between the two frames. Most of the original vertical resolution can be restored in this way.

In contrary to a Bayer RGBG grid, which is fixed in hardware, the grid used by the described method can alternate therefore temporally. The implementation by using temporal interpolation would require an additional motion detector, in addition a switch or fader, which decides to choose between a temporal or a spatial pixel reconstruction, or a mix of both. Here also, the color-line offset procedure has in particular no horizontal artifacts, because all processing is vertically oriented.

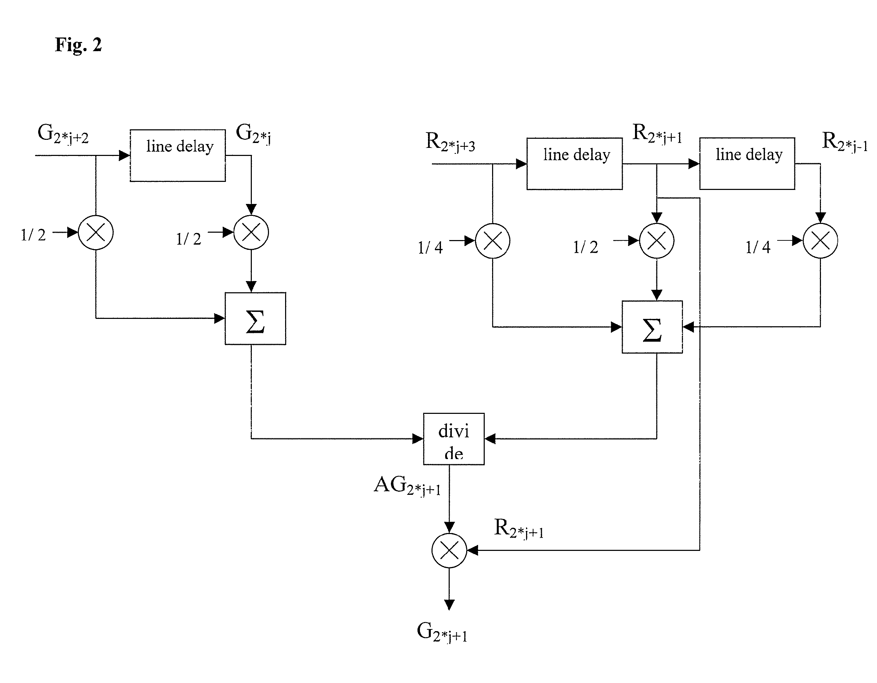

The method can be easily implemented by means of a signal processor or any microprocessor, as shown in figure 2, which shows how to calculate for example a missing pixel value $G_{2*j+1}$: When receiving the pixel value $G_{2*j}$, this value is delayed by a line delay, for example by using a memory. Then this value is multiplied by a factor 1/2, and then added with the pixel value $G_{2*j+2}$, which is before also multiplied by a factor of 1/2. The resulting value X corresponds with the numerator of equation (1).

For calculating the denominator of equation (1), the red pixel values $R_{2*j+1}$ and $R_{2*j-1}$ are delayed by one respectively two line delays, and then added with the pixel value $R_{2*j+3}$, after a multiplication with respective scale factors 1/4, 1/2, and 1/4, the sum resulting in a value Y. The value X divided by Y results in the green/red colour ratio $AG_{2*j+1}$. This value multiplied with the red pixel value $R_{2*j+1}$ yields the wanted green pixel value $G_{2*j+1}$.

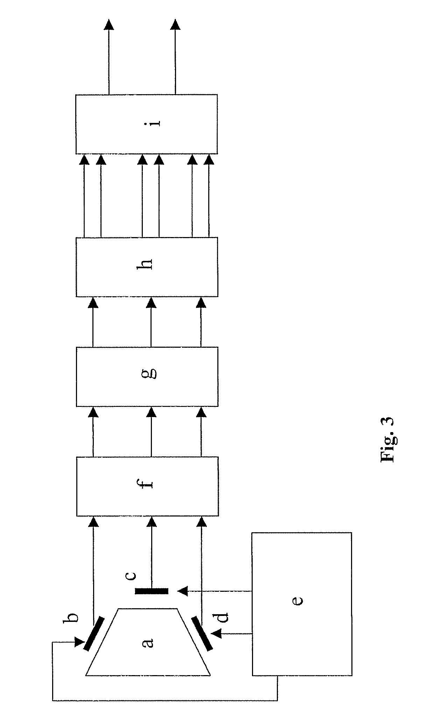

In figure 3 a circuit arrangement is shown comprising an optical system a for separating incoming light into three colours red, green and blue, and three optical sensors b, c, d for providing respective colour components R, G, B for establishing a video signal. The optical sensors b, c, d are for example CCD or CMOS sensors. The three optical sensors b, c, d are coupled with an image sensor control e, which reads out the pixel values of the optical sensors in a known manner for providing and establishing a video signal with three colour components R, G, B.

The output signals of the optical sensors b, c, d are coupled to a video processing circuit f. The image sensor control e provides in particular the colour offset selection as described above. The components a - f are arranged for example within a video camera or a television camera and the video processing circuit f provides an output signal in accordance with a known television standard, or provides selected output signals R, G, B, in accordance with the method described above. The video processing circuit f is in particular able to operated with normal bandwidth and with reduced bandwidth.

The output signals of the video processing circuit f are coupled in this embodiment to a transmission system g, for transmitting the R, G, B signals to a remote base station. The base station comprises a signal processor h for receiving and processing the R, G, B signals of the transmission system g. The signal processor h is coupled to an output signal formatter i, for providing a video output signal.

The circuit arrangement described with regard to figure 3 is in particular a system comprising a camera and a base station for providing a HDTV signal with a standard frame rate as well as a HDTV signal with a slow motion frame rate. For the slow motion operation, the image sensor control e uses a respective higher frame rate for data acquisition and provides a selection of the colour components RGB in accordance with the method described in above. The bandwidth of the transmission system g therefore does not have to be increased.

For a full motion television signal, the signal processor h operates as known, and when receiving a slow motion signal with selected R,G,B signals, the signal processor h provides a signal reconstruction in accordance with the method as described above. The output signal formatter i provides a double combined output by remapping signals in accordance with known television standards for slow motion and full motion video signals with a high picture quality, in particular with a HDTV quality.

The output signals provided by the video processing circuit f can be in particular R, G, B signals having a logarithmic intensity related to a gamma value of the television camera. The signal processor h can use then only simple subtraction and addition methods as described before, which reduces the processor work load. The logarithmic values have further the advantage, that noise problems are prevented, which can occur for example with low signal amplitudes corresponding to dark images, which would result in extremely small divisors.

The present invention is not limited to the embodiments as described with regard to the figures and other modifications are also possible for those skilled in the art without departing from the scope of the invention. In particular, the circuit arrangement with the components a - i as shown in figure 3 can be integrated also within a video camera or a still picture camera.

The method as described before can be used in a further aspect of the invention in the same way for providing a horizontal interpolation: A first colour component, for example green G can be selected having a horizontal offset with regard to the two other colour components R and B and missing pixels of the missing colour component G can be interpolated by using neighbouring pixels of the colour components R, B as described above.

For a camera, in particular a vertical offset of a half pixel and a horizontal offset of a half pixel of the first colour component with regard to the two other colour components may be used. Several possibilities exist for providing a vertical and/or horizontal offset: An offset might be accomplished by means of the addressing of the optical sensor providing the first colour component with regard to the optical sensors of the two other colour components, respectively, by providing a corresponding readout of the colour pixels. A further possibility is to misalign the optical sensor for the first colour component with regard to the two other sensors providing the second and third colour component.

**Claims**

1. Method for processing a video signal having three colour components (R, G, B) for a picture display with n horizontal lines, with the steps of
selecting a first colour component (G) having a vertical offset with regard to the two other colour components (R, B) and reconstructing missing colour components (R, G, B) of a horizontal line by a vertical interpolation of neighbouring colour components (R, G, B).

2. Method according to claim 1, wherein the first colour component (G) has a vertical offset of a half vertical line or of one vertical line with regard to the two other colour components (R, B).

3. Method according to claim 1 or 2, wherein the first colour component is a green colour component (G) and the two other colour components (R, B) are red and blue colour components, and that for a horizontal line of a field or frame alternatively the first colour component (G) or the second and third colour components (R, B) are selected.

4. Method according to claim 1, 2 or 3, wherein the selection of the colour components (R, G, B) is alternating with regard to subsequent frames or fields.

5. Method according to one of the preceding claims, wherein a first missing colour component (R, G, B) of a certain line is calculated by linear interpolation (1) via neighbouring lines of colour components (R, G, B) by using a colour ratio of neighbouring lines of said first colour component related to neighbouring lines and/or to said certain line one of the other colour components.

6. Method according to claim 5, wherein the colour ratio for a pixel i of a line j is calculated by adding the pixel values i of the lines j-1, j+1 of the missing colour component, the sum being related to the sum of the pixel values i of the lines j-2, j and j+2 of one of the other colour components.

7. Method according to claim 6, wherein the pixel value of line j of the other colour component is weighted with a higher weighting factor (0,5) as compared with the pixel values of the neighbouring lines j-2 and j+2 of said colour component (0,25).

8. Method according to one of the preceding claims, wherein the colour component signals (R, G, B) are logarithmic signals in accordance with a gamma value.

9. Method according to one of the preceding claims, wherein the first colour component (G) has further a horizontal offset with regard to the two other colour components (R, B) and missing pixels of a colour component (R, G, B) are reconstructed by a horizontal interpolation of neighbouring pixels of the other colour components (R, G, B).

10. Method according to claim 9, wherein the first colour component (G) has a vertical offset of a half pixel and a horizontal offset of a half pixel with regard to the two other colour components (R, B).

11. Method according to one of the preceding claims, wherein the vertical offset and/or the horizontal offset is accomplished by adaptation via the addressing and/or the readout of the first colour component (G), or via a misalignment of the optical sensor (b) providing the first colour component (G).

**12.** Circuit arrangement, comprising
a camera with three optical sensors (b, c, d)
an image sensor control (e) coupled to the three optical sensors (b, c, d) for establishing a video signal with three colour components (R, G, B), and
a signal processor (h) coupled to the image sensor control (e), for providing a video signal with n horizontal lines, the circuit arrangement using a method in accordance with one of the preceding claims.

**13.** Circuit arrangement according to claim 12, wherein the signal processor (h) is arranged in a base station remote from the camera (a-f).

**14.** A camera comprising
three optical sensors (b, c, d) for providing a video signal with three colour components (R, G, B),
an image sensor control (e) coupled to the three optical sensors (b, c, d), and
a signal processor (h) coupled to the image sensor control (e), for providing a video or a still picture signal with n horizontal lines, the camera using a signal selection in accordance with one of the preceding claims 1-11.

$$A_{G3} = (G_2 + G_4) / (R_1 + R_3 + R_5)$$

$$R_3 * A_{G3} = G_3$$

Horizontal i

Vertical j

**Fig. 1**

**Fig. 2**

$G_{2*j+2}$ — line delay — $G_{2*j}$

$1/2$ ⊗     $1/2$ ⊗

Σ

$R_{2*j+3}$ — line delay — $R_{2*j+1}$ — line delay — $R_{2*j-1}$

$1/4$ ⊗     $1/2$ ⊗     $1/4$ ⊗

Σ

divide

$AG_{2*j+1}$

$R_{2*j+1}$

⊗

$G_{2*j+1}$

Fig. 3

**European Patent Office**

**EUROPEAN SEARCH REPORT**

Application Number

EP 05 30 0642

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 442 718 A (KOBAYASHI ET AL) 15 August 1995 (1995-08-15) | 1-3,9-14 | H04N11/02 |
| Y | * column 3, line 46 - column 7, line 17 * * column 9, line 53 - line 63; figures 1-4 * | 4,6,7 | |
| X | US 5 172 227 A (TSAI ET AL) 15 December 1992 (1992-12-15) * column 6, line 29 - line 33 * | 1,5,8 | |
| Y | * column 8, line 8 - column 10, line 45; figures 1-6 * | 6,7 | |
| X | US 5 053 861 A (TSAI ET AL) 1 October 1991 (1991-10-01) * the whole document * | 1,5,8 | |
| Y | US 5 099 317 A (TAKEMURA ET AL) 24 March 1992 (1992-03-24) * column 6, line 65 - column 7, line 1 * | 4 | |
| A | EP 0 605 738 A (MATSUSHITA ELECTRIC INDUSTRIAL CO., LTD; MATSUSHITA ELECTRIC IND CO LT) 13 July 1994 (1994-07-13) | | |

TECHNICAL FIELDS SEARCHED (IPC)

H04N

The present search report has been drawn up for all claims

| Place of search | Date of completion of the search | Examiner |
|---|---|---|
| The Hague | 10 January 2006 | Yvonnet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 30 0642

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2006

| Patent document cited in search report | | Publication date | Patent family member(s) | | Publication date |
|---|---|---|---|---|---|
| US 5442718 | A | 15-08-1995 | KR | 254081 B1 | 15-04-2000 |
| US 5172227 | A | 15-12-1992 | DE | 69120661 D1 | 08-08-1996 |
| | | | DE | 69120661 T2 | 20-02-1997 |
| | | | EP | 0514535 A1 | 25-11-1992 |
| | | | JP | 5505084 T | 29-07-1993 |
| | | | WO | 9210911 A1 | 25-06-1992 |
| US 5053861 | A | 01-10-1991 | EP | 0436012 A1 | 10-07-1991 |
| | | | JP | 4502996 T | 28-05-1992 |
| | | | WO | 9101613 A1 | 07-02-1991 |
| US 5099317 | A | 24-03-1992 | FR | 2637145 A1 | 30-03-1990 |
| EP 0605738 | A | 13-07-1994 | DE | 69327895 D1 | 30-03-2000 |
| | | | DE | 69327895 T2 | 12-10-2000 |
| | | | WO | 9403015 A1 | 03-02-1994 |
| | | | US | 5532742 A | 02-07-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6181376 B

- US 6714242 B